# EUROPÄISCHE PATENTSCHRIFT

(11) **EP 0 613 856 B1**
(45) Veröffentlichungstag und Bekanntmachung des Hinweises auf die Patenterteilung: **18.06.1997**
(21) Anmeldenummer: 93116924.7
(22) Anmeldetag: 20.10.1993
(51) Int. Cl.: C01B 3/56, C01B 3/58, C10K 1/32, C10K 1/34

(54) **Verfahren zur getrennten Entfernung von Schwefelverbindungen und CO2 aus Gas**
Process for removing separately sulfur compounds and CO2
Procédé pour éliminer séparement des composés de soufre et le CO2 d'un gaz

(30) Priorität: 23.10.1992 DE 4235957
(43) Veröffentlichungstag der Anmeldung: 07.09.1994
(73) Patentinhaber: RWE Entsorgung Aktiengesellschaft, 45141 Essen (DE)
(72) Erfinder: Münch, Herbert Dr., D-45141 Essen (DE); Herbermann, Michael Dr., D-45966 Gladbeck (DE)

(56) Entgegenhaltungen:
- EP-A- 0 411 506
- EP-A- 0 533 232
- DE-B- 1 224 865
- CHEMICAL ABSTRACTS, vol. 99, no. 14, 3. Oktober 1983, Columbus, Ohio, US; abstract no. 107456z, KAWETETSU CHEMICAL INDUSTRY CO, LTD, 'PURE HYDROGEN FROM COKE OVEN GAS BY THE PRESSURE SWING ADSORPTION PROCESS' Seite 120 ;

## Beschreibung

Die vorliegende Erfindung betrifft ein Verfahren zur getrennten Entfernung von Schwefelwasserstoff und CO₂ aus Gasen, wobei der Schwefelgehalt des Gases nach Zuführung von Sauerstoff katalytisch bis zu 1.000 ppm und Gas mit einem Schwefelgehalt ≤ 3.000 ppm, über mit Jod und/oder Jodverbindungen dotierter Aktivkohle bis zu einem Schwefelgehalt < 10 mg/m³ gesenkt wird und aus dem Gas nach der Schwefelreinigung durch Druckwechseladsorption Kohlendioxyd bis auf einen Restgehalt von > 0- < 5 Gew.-% entfernt wird.

Industriegase enthalten häufig schwefelhaltige Verbindungen, insbesondere Schwefelwasserstoff sowie CO₂ als Verunreinigungen. Beispiele sind Synthesegas aus Vergasungsanlagen, Gase aus Gaswaschanlagen oder Raffinerien, Tailgase aus Claus-Anlagen oder Gase aus Hydrieranlagen.

Bei der üblichen Gasreinigung zur Entfernung von Schwefelwasserstoff und CO₂ erfolgt eine Wäsche mit speziellen Lösungsmitteln. Beispiele hierfür sind tiefgekühltes Methanol, N-Methylpyrrolidon, Triethanolamin, Propylencarbonat und andere. Mit Hilfe dieser Lösungsmittel werden Schwefelwasserstoff, Kohlensäure sowie COS und CS₂ gemeinsam entfernt, wobei mit erheblichem technischen Aufwand die absorbierten Gase zumindest weitgehend getrennt aus den Lösungsmitteln wieder abgetrennt werden.

Von besonderem Interesse ist das in Vergasern erzeugte Synthesegas, ein Gemisch von Wasserstoff und Kohlenmonoxyd, das insbesondere zur Erzeugung von Methanol und Ammoniak verwendet wird.

Auch im Falle der Reinigung von Synthesegas, das vor allem Schwefelwasserstoff und CO₂ enthält, werden im allgemeinen Gaswäschen angewandt. Ein sehr verbreitetes Verfahren ist die Rectisol-Wäsche, nämlich die Wäsche des Gases mit tiefgekühltem Methanol.

Das aus dem Vergaser austretende Rohgas wird zur Wärmerückgewinnung zunächst zur Dampferzeugung genutzt und entweder durch weitere indirekte Kühlung oder durch Quenschen, d. h. direkte Kühlung mit Wasser abgekühlt.

Das Synthesegas wird nach der Abkühlung einer zweistufigen Wasserwäsche zugeführt, wobei die Wäscher unterschiedlich konstruiert sein können. Beispielsweise kann es sich um Strahlwäscher, Bodenkolonnen, Füllkörperkolonnen u. a. handeln. In der ersten Waschstufe werden, soweit vorhanden, HC, HF, HBr und HJ sowie ggf. ein kleiner Teil NH₃ ausgewaschen. In der zweiten Stufe findet eine weitere Auswaschung des Ammoniaks statt. Die geschilderten naß-physikalischen Wäschen und die selektive Gewinnung von insbesondere Schwefelwasserstoff und Kohlendioxyd aus der Waschflüssigkeit sind mit hohen Kosten verbunden. Dies betrifft nicht nur die Investitionskosten sondern auch die Betriebskosten, wozu auch das Aufbereiten der eingesetzten Lösungsmittel zu rechnen ist.

Konventionelle Gasreinigungsverfahren sind beispielsweise in DE-OS 2750971 und DE-OS 2827498 beschrieben. Auch in der DE-OS 3112761 ist ein konventionelles Verfahren zur Reinigung von Koksofengas offenbart. In der deutschen Patentschritt P 1 224 865 wird ein Verfahren zur Abscheidung von Schwefelwasserstoff aus Viskoseabluft offenbart, bei dem der Schwefelwasserstoff über 0,1 bis 3 % Jod auf Aktivkohle in elementaren Schwefel umgewandelt wird.

In der DE-OS 3718880 wird die Reinigung von Abgasen aus Claus-Anlagen, in denen elementarer Schwefel aus hochkonzentriertem H₂S durch 2-stufige Umsetzung über Bauxit als Katalysator durchgeführt wird, offenbart. Hierbei werden die Abgase einer Hydrierung unterworfen. Anschließend werden die Schwefelverbindungen durch Druckwechseladsorption an Aktivkohle oder Molekularsieben entfernt. Auch in der IP-A-5891003 (CA99: 107456 z) wird die Reinigung von Koksofengas unter Einsatz der Druckwechseladsorption zur Entfernung von CO₂ beschrieben.

Da die konventionellen naß-physikalischen Wäschen sowohl im Hinblick auf die Investitionen als auch auf die Betriebskosten aufwendig sind, bestand die Aufgabe, die Reinigung von Gas durch Entfernung von H₂ S und CO₂ sowohl in wirtschaftlicher als auch in technischer Hinsicht zu verbessern, insbesondere naß-physikalische Wäschen zu vermeiden.

Dies ist der Anmelderin durch ein Verfahren zur getrennten Entfernung von Schwefelwasserstoff und CO₂ aus Gasen gelungen, durch Umwandlung höherer Schwefelwasserstoffkonzentrationen zu elementarem Schwefel in einer katalytischen 1. Stufe und die Umwandlung niedrigerer Schwefelwasserstoffkonzentrationen zu elementarem Schwefel in einer 2. Stufe über mit Jod aktivierter Aktivkohle, wobei anschließend eine Entfernung des CO₂ durch Druckwechseladsorption erfolgt, dadurch gekennzeichnet, daß in einer 1. Stufe das zu reinigende Gas durch eine Katalysatorzone geleitet wird, in der ein Teil des vorliegenden Schwefelwasserstoffs katalytisch zu SO₂ oxidiert wird durch Zugabe von Sauerstoff in einer solchen Menge, daß man ein Verhältnis von Schwefelwasserstoff zu SO₂ von etwa 2 : 1 erhält, bevorzugt ist hierbei der Schwefelwasserstoff im Überschuß, daß durch katalytische Umsetzung der Gase Schwefelwasserstoff und SO₂ der Schwefelgehalt bis zu 1000 ppm gesenkt wird, daß in einer 2. Stufe Gas mit einem Schwefelgehalt ≤ 3.000 ppm über Aktivkohle, die eine Dotierung aus Jod und/oder Jodverbindungen aufweist bis zu einem Schwefelgehalt < 10 mg/m³ gesenkt wird.

Erfindungsgemäß werden die im Gas vorhandenen Verunreinigungen Schwefelwasserstoff und CO₂ getrennt entfernt. Hierdurch ist eine aufwendige Waschstufe, in der beide Verunreinigungen gemeinsam entfernt werden und anschließend selektiv aus dem Lösungsmittel abgetrennt werden müssen, nicht mehr erforderlich.

In Abhängigkeit von dem Schwefelwasserstoffgehalt kann die erfindungsgemäße Entschwefelung ein- oder zweistufig erfolgen. Bei hohen Schwefelwasserstoff-Gehalten von mehr als 3.000 ppm wird das zu reinigende Gas durch eine Katalysatorzone geleitet, in der ein Teil des vorliegenden Schwefelwasserstoffes katalytisch zu S0₂ oxidiert wird. Hierbei wird der Sauerstoff in einer solchen Menge zugegeben, daß man ein Verhältnis von H₂S und SO₂ von etwa 2 : 1 erhält. In Gegenwart eines Katalysators wird nunmehr durch Umsetzung der beiden Gase elementarer Schwefel erzeugt. Bevorzugt wird ein Verhältnis, H₂S zu S0₂ eingestellt, in dem der Schwefelwasserstoff im Überschuß vorliegt. In dieser Stufe wird die Schwefelwasserstoffkonzentration bis zu ≤ 3.000 ppm, bevorzugt bis zu ≤ 1.500 ppm und besonders bevorzugt bis zu ≤ 1.000 ppm gesenkt. Die Entschwefelung bis zu 1.000 ppm erfolgt nach dem Stand der Technik.

Gase, die einen geringeren Schwefelgehalt als 3.000 ppm, bevorzugt 1.500 ppm und besonders bevorzugt 1.000 ppm enthalten, werden nunmehr einer zweiten Entschwefelungsstufe zugeführt, in der der Schwefelgehalt in Gegenwart dotierter Aktivkohle bis zu ≤ 10 mg/m³ reduziert wird. Als Dotierung werden Jod und/oder Jodverbindungen eingesetzt. Bevorzugt wird mit Kaliumjodid dotiert. In dieser Reinigungsstufe wird der restliche Schwefelwasserstoff katalytisch zu Schwefel umgesetzt. Der ggf. erforderliche Sauerstoff wird zudosiert. Der Schwefel wird an der Aktivkohle adsorbiert. Die Reaktionstemperatur liegt im allgemeinen bei 50 bis 100 °C.

Nunmehr kann das im Gas befindliche C0₂ durch Druckwechseladsorption bis auf einen Restgehalt von < 10 Gew.-%, bevorzugt < 5 Gew.-% entfernt werden.

Da die Druckwechseladsorption eine den Fachmann vertraute Technologie ist, soll sie hier nicht näher erläutert werden.

Im allgemeinen wird die Druckwechseladsorption bei 5 bis 200 bar, bevorzugt bei 10 bis 100 bar betrieben.

Das erfindungsgemäße Verfahren bietet wesentliche Vorteile gegenüber dem Stand der Technik. So ist es besonders geeignet für kleine Gasmengen zwischen 5.000 und 50.000 Nm³/h. Ein up- oder down-scaling ist innerhalb dieses Bereiches unproblematisch.

Flüssige Adsorptionsmittel werden nicht eingesetzt, daher entfallen Lösungsmittel-Emissionen.

Beide erfindungsgemäßen Schwefelsreinigungssstufen erfolgen ohne Kreislaufführung eines Gasstromes. Hierdurch wird insbesondere die Wirtschaftlichkeit erhöht.

In beiden Reinigungsstufen wird elementarer Schwefel gewonnen.

Die erfindungsgemäße Reinigungstechnologie ist sehr flexibel gegenüber schwankenden Gaszusammensetzungen.

Die hohen Investitionskosten für eine naß-physikalische Wäsche verbunden mit den hohen Betriebskosten und der Wiederaufarbeitung der eingesetzten Lösungsmittel entfallen.

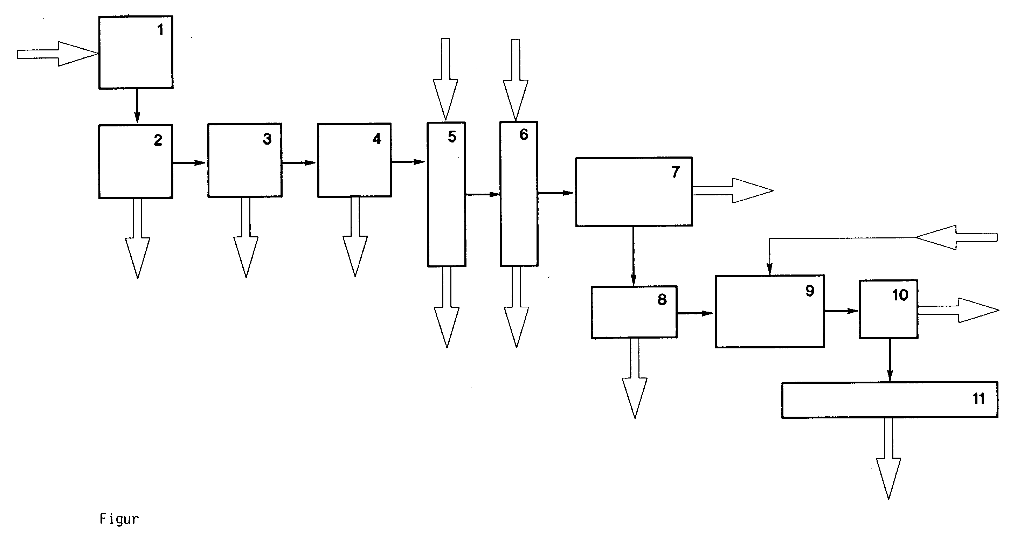

Mit Hilfe der Figur soll das erfindungsgemäße Verfahren näher erläutert werden.

In Vergasungsanlage 1 wird das zu vergasende Material zugeführt. Das rohe Synthesegas gelangt in die Abhitzevorrichtung 2, in der Dampf erzeugt wird. Das Gas fließt nunmehr über das Gasfilter 3, in dem Staub abgetrennt wird und weiter in Abhitzevorrichtung 4, in der Dampf von niederem Druck erzeugt wird. In Vorrichtung 5 und 6 werden Halogenwasserstoffsäuren und Ammoniak und ggf. Reststaub mit Wasser ausgewaschen. Aus der Wäsche gelangt das Synthesegas in die erfindungsgemäße Vorrichtung 7 zur katalytischen Entschwefelung. Aus 7 wird der Schwefel abgezogen. Das Synthesegas wird nun über das mit Kaliumjodid aktivierte dotierte Aktivkohlebett geleitet, wobei ein Teil des Bettes zur Regenerierung abgezogen wird. In 9 kann das Synthesegas einer Konvertierung mit Wasser unterworfen werden. In 10 wird nunmehr in einer Druckwechseladsorptionsanlage das C0₂ entfernt. Das H₂S- und C0₂-freie Synthesegas kann nun beispielhaft einer Methanolsynthese 11 zugeführt werden. Erfindungsgemäß kann auch in 7 bzw. 8 entschwefeltes Synthesegas ohne Konvertierung der Druckwechseladsorption 10 direkt zugeführt werden. Ggf. ist nach der Druckwechseladsorption eine Einstellung des gewünschten H₂/C0-Verhältnisses vorzunehmen.

In der katalytischen Entschwefelung 7 wird der Schwefel durch Kühlen auf übliche Weise zu flüssigem Schwefel kondensiert.

Die beladene Aktivkohle wird nach dem Stand der Technik regeneriert.

## Patentansprüche

1. Verfahren zur getrennten Entfernung von Schwefelwasserstoff und CO₂ aus Gas durch Umwandlung höherer Schwefelwasserstoffkonzentrationen zu elementarem Schwefel in einer katalytischen 1. Stufe und die Umwandlung niedrigerer Schwefelwasserstoffkonzentrationen zu elementarem Schwefel in einer 2. Stufe über mit Jod aktivierter Aktivkohle, wobei anschließend eine Entfernung des CO₂ durch Druckwechseladsorption erfolgt, dadurch gekennzeichnet, daß in einer 1. Stufe das zu reinigende Gas durch eine Katalysatorzone geleitet wird, in der ein Teil des vorliegenden Schwefelwasserstoffs katalytisch zu SO₂ oxidiert wird durch Zugabe von Sauerstoff in einer solchen Menge, daß man ein Verhältnis von Schwefelwasserstoff zu SO₂ von etwa 2 : 1 erhält, bevorzugt ist hierbei der Schwefelwasserstoff im Überschuß, daß durch katalytische Umsetzung der Gase Schwefelwasserstoff und SO₂ der Schwefelgehalt bis zu 1000 ppm gesenkt wird, daß in einer 2. Stufe Gas mit einem Schwefelgehalt ≤ 3.000 ppm über Aktivkohle, die eine Dotierung aus Jod und/oder Jodverbindungen aufweist bis zu einem Schwefelgehalt < 10 mg/m³ gesenkt wird.

2. Verfahren nach Anspruch 1, dadurch gekennzeichnet, daß die Gasreinigung Synthesegas betrifft.

3. Verfahren nach den Ansprüchen 1 und 2, dadurch gekennzeichnet, daß als Jodid Kaliumjodid eingesetzt wird.

4. Verfahren nach den Ansprüchen 1 bis 3, dadurch gekennzeichnet, daß das Gas vor der Entschwefelung mit Wasser behandelt wird.

## Claims

1. Process for the separate removal of hydrogen sulfide and carbon dioxide from gas, by conversion of higher concentrations of hydrogen sulfide into elemental sulfur in a first catalytic stage and conversion of lower concentrations of hydrogen sulfide into elemental sulfur in a second stage on activated charcoal activated with iodine, and subsequent removal of carbon dioxide by pressure swing adsorption, characterized in that gas to be purified is passed in a first stage through a catalyst zone, within which part of the hydrogen sulfide present, is catalytically oxidized to sulfur dioxide by addition of oxygen in such a quantity that a ratio of hydrogen sulfide to sulfur dioxide of approximately 2 : 1 is obtained, whereby hydrogen sulfide preferably is in excess, that by catalytic conversion of the gases hydrogen sulfide and sulfur dioxide the sulfur content is reduced down to 1000 ppm, that in a second stage gas of a sulfur content of ≤ 3000 ppm is reduced to a sulfur content of < 10 mg/m³ on activated charcoal, doped with iodine and / or compounds of iodine.

2. Process according to claim 1, characterized in that gas to be purified is synthesis gas.

3. Process according to claims 1 and 2, characterized in that as a iodine compound potassium iodide is used.

4. Process according to claims 1 - 3, characterized in that the gas is treated with water before desulfurization.

## Revendications

1. Procédé pour l' élimination separées de l' acide sulfhydrique et du dioxyde de carbone d' un gaz, par transformation des concentrations élevées d l' acide sulfhydrique à soufre élémentaire dans une première étape et la transformation des concentrations basses de l' acide sulfhydrique à soufre élémentaire dans une seconde étape sur charbon actif activé avec du jode, à l' occassion de quoi l' éloignement du dioxide de carbone à lieu après par adsorption par variation de pression, caractérisé en ce que dans une première étage le gaz à purifier est condiut à travers une zone d' un catalyseur dans laquelle une partic de l' acide sulfhydrique présente est oxydée catalytique à anhydre sulfureux par addition d' oxygen dans une quantité qu' on obtient l' acide sulfhydrique et l' an hydre sulfureux dans un rapport d' environ de 2 : 1, à l' occasion de quoi l' acide sulfhydrique est préférable en excès; en ce que par transformation catalytique des gaz d' acide sulfhydrique et d' anhydre sulfureux le contenu du soufre est abaissé jusqu' à 1000 ppm, en ce que dans une seconde ètape du gaz avec un contenu du soufre de ≤ 3000 ppm est abaissé jusqu' un contenu du soufre de 10 mg / m³ sur charbon actif, activé avec du jode et / on des composés du jode.

2. Procédé selon la revendication 1, caractérisé en ce que la purification du gaz concerne du gaz synthétique.

3. Procédé selon les revendication 1 et 2, caractérisé en ce que pour iodure, iodure de potassium est employé.

4. Procédé selon les revendication 1 à 3, caractérisé en ce que le gaz est traité avec de l' eau avant la désulfuration.
